(19) Europäisches Patentamt
European Patent Office
Office européen des brevets

(11) **EP 4 185 424 B1**

(12) **EUROPÄISCHE PATENTSCHRIFT**

(45) Veröffentlichungstag und Bekanntmachung des Hinweises auf die Patenterteilung:
**03.04.2024  Patentblatt 2024/14**

(21) Anmeldenummer: **21742050.4**

(22) Anmeldetag: **29.06.2021**

(51) Internationale Patentklassifikation (IPC):
**C22C 38/02** $^{(2006.01)}$    **C22C 38/04** $^{(2006.01)}$
**C22C 38/12** $^{(2006.01)}$    **C22C 38/16** $^{(2006.01)}$
**C22C 38/40** $^{(2006.01)}$    **C22C 38/00** $^{(2006.01)}$
**B22D 11/14** $^{(2006.01)}$    **C21C 7/10** $^{(2006.01)}$
**B22D 11/12** $^{(2006.01)}$

(52) Gemeinsame Patentklassifikation (CPC):
**B22D 11/142; B22D 11/12; C21C 7/10;**
**C22C 38/004; C22C 38/02; C22C 38/04;**
**C22C 38/12; C22C 38/16; C22C 38/40;**
**Y02P 10/143**

(86) Internationale Anmeldenummer:
**PCT/EP2021/067764**

(87) Internationale Veröffentlichungsnummer:
**WO 2022/017733 (27.01.2022 Gazette 2022/04)**

(54) **VERFAHREN ZUM HERSTELLEN VON STAHLBAND**

METHOD FOR PRODUCING STEEL STRIP

PROCÉDÉ DE FABRICATION DE FEUILLARD D'ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2020   DE 102020209299**

(43) Veröffentlichungstag der Anmeldung:
**31.05.2023   Patentblatt 2023/22**

(73) Patentinhaber: **SMS Group GmbH**
**40237 Düsseldorf (DE)**

(72) Erfinder:
• **SCHUSTER, Ingo**
**47877 Willich (DE)**
• **HENKEL, Thomas**
**47057 Duisburg (DE)**
• **WIEGMANN, Volker**
**47055 Duisburg (DE)**
• **REIFFERSCHEID, Markus**
**41352 Korschenbroich (DE)**
• **FERKEL, Hans**
**40237 Düsseldorf (DE)**

(74) Vertreter: **Kross, Ulrich**
**Hemmerich & Kollegen**
**Patentanwälte**
**Hammerstraße 2**
**57072 Siegen (DE)**

(56) Entgegenhaltungen:
**EP-A1- 1 752 549        WO-A2-2004/108971**
**US-A1- 2016 108 494**

**Beschreibung**

Die Erfindung betrifft ein Verfahren zum Herstellen von Stahlband, insbesondere von Warmband, in Form gewickelter Coils oder in Form abgetafelter Einzelbleche, bei dem zunächst eine Stahlschmelze hergestellt wird, diese dann in einer Stranggießanlage zu einem Strang geformt wird, der Strang dann ungeteilt oder unterteilt in einzelne Brammen in ein Heizaggregat geleitet wird und der erhitzte Strang oder die erhitzten Brammen dann in einem sich anschließenden Walzwerk zum Band gewalzt werden. Die Herstellung des Bands, insbesondere des Warmbands, soll dabei bevorzugt ohne zwischenzeitliche Abkühlung des Strangs bzw. der Brammen auf Umgebungstemperatur (20 °C) erfolgen. Damit soll ein Stahlband zur Verfügung gestellt werden, welches für eine Weiterverarbeitung zu Fertigprodukten mit optisch anspruchsvollen Oberflächen, wie sichtbare Automobilbauteile, Verpackungsblech, Haushaltsgeräte bzw. nicht-kornorientierte Elektrobleche, vorgesehen ist.

Warmbänder als Vormaterial, beispielsweise aus ULC/IF-Stählen für die Herstellung von Automobilaußenhautmaterial oder vergleichbar anspruchsvollen Oberflächen, werden über die Prozessroute Hochofen (Roheisen), Blasstahlwerk (BOF), optionale Vakuumbehandlung, weiterer sekundärmetallurgischer Schritte und Stranggießen zu Brammen sowie anschließendes Auswalzen zu Warmbändern in einer Warmbreitbandstraße hergestellt. Um die gewünschte Kombination aus Festigkeit und sonstigen vorteilhaften Verarbeitungseigenschaften zu erreichen, sind die herzustellenden Schmelzen mit ihren chemischen Zusammensetzungen stark fokussiert auf die Einhaltung maximaler Gehalte an Beimengungen an Stahlbegleitern wie Cu, Cr, Ni, Mo sowie unerwünschten Gehalten an S, N und H.

Die herkömmliche Route ermöglicht die Herstellung der geforderten chemischen Zusammensetzungen durch die Entschwefelung des Roheisens vor dem Chargieren in das Blasstahlwerk, durch die Begrenzung des Stickstoffgehalts über prozessbedingt hohe Entkohlungsgeschwindigkeiten beim Sauerstoffaufblasen im Blasstahlwerk, durch die Absenkung des Kohlenstoffgehaltes, falls erforderlich über eine Vakuumbehandlung auf 20 ppm (d. h. 0,002 Gew.-%) und niedriger, durch die Feinjustierung der Analyse in einem sekundärmetallurgischen Behandlungsschritt sowie durch das Vergießen des Stahles zu Brammen mit Dicken oberhalb 200 mm.

In dieser Route ist es üblicherweise vorgesehen, die gegossenen Brammen in einem Brammenlager abkühlen zu lassen und dann einer Oberflächeninspektion zu unterziehen. Diese Inspektion kann vollständig oder nur teilweise an repräsentativen Brammen einer Schmelze erfolgen. Die geprüften (und falls erforderlich reparierten) Brammen werden nachfolgend zu Walzprogrammen zusammengestellt und in der vorgeplanten Reihenfolge in ein nachgeschaltetes Heizaggregat eingesetzt.

Durch diese Vorgehensweise sind die Herstellprozesse für die Brammen (Stahlwerk und Gießbetrieb) sowie Warmwalzwerk sowohl zeitlich als auch örtlich voneinander getrennt und somit auch planbar.

Verschiedene vorbekannte Lösungen sind beschrieben in der EP 1 752 549 A1, in der WO 2004/108971 A2, in der US 2016/108494 A1, in der DE 692 27 014 T2, in der DE 697 13 639 T2, in der EP 2 998 046 B1, in der CN 106148639 A, in der JP 2003064412 A, in der KR 1063666 B1, in der KR 2019076164 A, in der KR 1017511 B1 und in der KR 1412566 B1.

Nachteilig ist, dass diese sogenannten integrierten Hüttenwerke (einschließlich Hochofen, ggf. Kokerei und Sinteranlage, und Konverter) relativ viel Platz benötigen, relativ hohe $CO_2$-Emissionen verursachen und in den Investitionskosten hoch sind.

Nachteilig bei konventionellen integrierten Hüttenwerken ist weiterhin, dass die einzelnen Produktionsschritte im Stahlwerk und in der Warmumformung überwiegend zeitlich und örtlich voneinander getrennt sind. Dies bedingt, dass die gegossenen Brammen vor Ihrer Weiterverarbeitung zumeist bis auf Raumtemperatur abkühlen.

Ein energiesparender Direkter-Einsatz, zeitnah nach dem Gießen, ist unter diesen Voraussetzungen nicht oder nur durch Einbeziehung von Sondermaßnahmen, wie durch einen Transport der Brammen unter Wärmedämmhauben, möglich.

Der Nachteil der vorbekannten Lösung der Herstellung der Stahlsorten, der diese Erfindung gilt, liegt somit in der mangelnden Energieeffizienz bei vergleichsweise hoher $CO_2$-Belastung der Umwelt.

Überwiegend elektrisch betriebene Schmelzaggregate, wie Elektrolichtbogenöfen (EAF), Induktionsschmelzöfen (IF) oder andere, hingegen benötigen weniger Platz und sind grundsätzlich heute bereits in der Lage, bei entsprechender Wahl der Einsatzstoffe hochqualitative Stähle zu produzieren. Überwiegende Anwendung finden diese Technologien bisher jedoch überwiegend in der Herstellung von höherlegierten Qualitäts- und Werkzeugstählen sowie hochqualitativen Sonderstählen mit hoher innerer Reinheit. Tiefstentkohlte unterhalb 150 ppm Kohlenstoff und/oder tiefstentstickte unterhalb 50 ppm Stickstoff Stahlschmelzen sind in Elektrolichtbogenöfen mit Chargengewichten oberhalb von 100 t und Schmelzzeiten kleiner 50 Minuten bisher nicht darstellbar. Daraus resultiert ein mittlerer Massenstrom von 2 t/min zur Weiterverarbeitung. Dieser Massenstrom ist nicht ausreichend für die gleichzeitige Realisierung eines Sequenzgusses mit hohen Brammenauslauftemperaturen zur Sicherstellung eines Direkteinsatzes. Hierfür ist ein Massenstrom von oberhalb von 4 t/min üblich.

Da charakteristische Oberflächenfehler an wiedererwärmten Stranggussbrammen insbesondere dann auftreten, wenn die gegossenen Brammen bei Oberflächentemperaturen im sogenannten Niedrigzähigkeitsbereich, der je nach Stahlzusammensetzung zwischen 700 °C und 950 °C liegt, in den Nachwärmaggregat vor der Warmwalzanlage eingesetzt werden, müssen diese Werkstoffe auf Temperaturen unterhalb dieses Bereiches abgekühlt werden.

Der genannte Temperaturbereich ist für jede Stahlzusammensetzung unterschiedlich zu definieren und lässt sich aus dem Zeit-Temperatur-Umwandlungsschaubild (ZTU) des Materials ablesen und/oder mittels metallkundlicher Simulationsverfahren (Gefügemodelle) berechnen. Aktuelle kommerziell verfügbare Simulationswerkzeuge sind mit ThermoCalc/DICTRA, MatCalc u.a. verfügbar.

Die beobachtete niedrigere Zähigkeit im besagten Temperaturbereich und die damit zusammenhängende Tendenz der Stähle, beim Wiedererwärmen Risse entlang der Austenitkorngrenzen auszubilden, hängt mit der Dichteänderung bei der Gefügeumwandlung Austenit-Ferrit-Austenit zusammen. Erreicht der abkühlende Stahl seine, für ihn gültige und von der chemischen Zusammensetzung abhängige, Umwandlungstemperatur $A_3$, so beginnt über die Keimbildung an den ehemaligen Austenitkorngrenzen die Gefügeumwandlung. Aufgrund seiner geringeren Dichte dehnen sich die Ferritanteile aus, werden aber vom festeren Austenitanteil unter Spannung gesetzt, woraufhin ein Kriechen einsetzt. Unterbricht man diese Gefügeumwandlung und erwärmt den Stahl wieder, schrumpft der vorher umgewandelte Volumenanteil Ferrit, wodurch Zugspannungen ausgeübt werden. Diese Zugspannungen in Verbindung mit Ausscheidungen von Nitriden und/oder Karbiden im Bereich der umwandelnden Gefügebereiche führen zu einer Schwächung der Korngrenzen und im ungünstigen Fall zum Aufreißen. Je nach Stahlsorte können diese Korngrenzenschädigungen nur oberflächennah oder tiefergehend sein. So geschädigte Oberflächen heilen im weiteren Verlauf der Verarbeitung nicht mehr aus, sind als Mikrorisse auf den Brammenoberflächen sichtbar und führen zu sehr feinen Oberflächenbeschädigungen am Warmband und letztendlich zur Abwertung. So geschädigte Warmbänder sind somit für anspruchsvolle Oberflächen nicht mehr verwendbar.

Um die Oberflächenschäden durch Wiedererwärmung zu minimieren, hilft man sich entweder mit der Festlegung eines Temperaturbereiches, welcher nicht als Direkteinsatz (auch Heißeinsatz) in die Nachwärmöfen genutzt werden soll, oder mit einer Festlegung des noch tolerierbaren Anteils an umgewandeltem Ferrits.

Direkteinsatz der Brammen bedeutet in diesem Fall, der umgewandelte Volumenanteil des oberflächennahen Gefüges ist kleiner als 10 Vol.-%. Erfahrungsgemäß geht der Metallurge davon aus, dass bei einer Unterschreitung der Starttemperatur für die Austenit-Ferrit Umwandlung $A_3$ von mehr als 10 K dieser Volumenanteil des Gefüges als Ferrit vorliegt. Metallkundliche Simulationswerkzeuge lassen heute eine bessere Vorhersage des Umwandlungsbeginns zu und sollten vorzugsweise zur Festlegung der Grenztemperaturen genutzt werden.

Von Warmeinsatz hingegen spricht man, wenn das Gefüge zu mindestens 75 Vol.-% umgewandelt ist und somit eine Schädigung entlang ehemaliger Austenitkorngrenzen minimiert ist. Allgemein wird angenommen, dass ein solcher Gefügezustand bei Temperaturen von $A_1$ + 20 K erreicht ist. Auch hier ist der Nutzung metallkundlicher Simulationsmethoden der Vorzug bei der Festlegung dieser Temperatur zu geben.

Die Direkteinsatzverfahren stehen mit den diversen Dünnbrammentechnologien zwar zur Verfügung, doch besteht hier die Problematik eines wesentlich größeren Verhältnisses zwischen der gegossenen Oberfläche und dem Volumen, welches die Wahrscheinlichkeit des Auftretens von stahlwerks- und/oder gießbedingten Oberflächenfehlern erhöht.

Der Erfindung liegt die **Aufgabe** zugrunde, ein Verfahren der eingangs genannten Art so fortzubilden, dass es möglich ist, insbesondere warmgewalzte Stahlbänder möglichst energiesparend herstellen zu können. Dabei soll insbesondere die Weiterverarbeitung zu hochwertigen kaltgewalzten und ggf. beschichteten Bändern möglich sein, wie sie beispielsweise für eine Automobilaußenhaut und vergleichbar anspruchsvolle Oberflächen benötigt werden.

Die Lös u n g dieser Aufgabe durch die Erfindung ist dadurch gekennzeichnet, dass zunächst eine Stahlschmelze hergestellt wird, die die folgende chemische Zusammensetzung aufweist:

- maximal 0,02 Gew.-% Kohlenstoff, vorzugsweise weniger als 0,01 Gew.-% Kohlenstoff,
- 0,01 bis 3,5 Gew.-% Silizium, vorzugsweise weniger als 0,1 Gew.-% Silizium,
- maximal 2,5 Gew.-% Mangan, vorzugsweise weniger als 1,0 Gew.-% Mangan,
- 0,01 bis 0,20 Gew.-% Kupfer, vorzugsweise weniger als 0,15 Gew.-% Kupfer,
- maximal 0,40 Gew.-% Chrom und Nickel, vorzugsweise weniger als 0,20 Gew.-% Chrom und Nickel,
- Niob, Titan, Vanadium und Bor mit jeweils weniger als 0,10 Gew.-%, vorzugsweise Titan, Vanadium und Bor mit weniger als 0,05 Gew.-%,
- maximal 70 ppm Stickstoff, vorzugsweise weniger als 50 ppm Stickstoff,
- optional weitere Elemente ohne Eisen mit einem Anteil von weniger als 1,0 Gew.-%, welche gezielt zulegiert werden oder die als unvermeidbare Beimengung über die Einsatzstoffe in die Schmelze gelangen, und
- Restgehalt an Eisen,

wobei die Herstellung der Stahlschmelze die Schritte umfasst:

    a) Aufschmelzen von festen, eisenhaltigen Ausgangsmaterial in einem vorzugsweise elektrisch betriebenen Einschmelzaggregat (beispielsweise in Form eines Elektrolichtbogenofens, eines Induktionsofens oder eines SAF);

b) kontinuierliches Zuführen von eisen- und kohlenstoffhaltigen festen Ausgangsmaterialien sowie von Luft, Sauerstoff und/oder Erdgas in das Einschmelzaggregat, um in der Flachbadphase eine kontinuierlich starke Kochreaktion über eine Dauer zwischen 2 und 30 min, vorzugsweise zwischen 10 und 20 min, zu erreichen (zwecks Vermeidung der Aufnahme von N aus der Ofenatmosphäre);

c) Zuführen der Schmelze in eine Vakuumanlage und Entkohlung der Schmelze in der Vakuumanlage mit einer maximalen Entkohlungsgeschwindigkeit von 180 ppm/min Kohlenstoff;

wobei sich hieran die Schritte anschließen:

d) Zuführen der so vorbehandelten Schmelze in die Stranggießanlage;

e) Vergießen der Schmelze in der kontinuierlich arbeitenden Stranggießanlage;

f) Zuführen des Stranges oder der aus diesem hergestellten Brammen in das Heizaggregat und Einstellen der erforderlichen Walztemperatur, wobei der Strang oder die Bramme mit einer Temperatur größer als $A_3$ - 20 K direkt in das Heizaggregat einläuft, so dass der Volumenanteil des Ferrits in den oberflächennahen Bereichen des Strangs oder der Bramme bis in eine Tiefe von mindestens 5 mm, bevorzugt bis in eine Tiefe von 10 mm, weniger als 5 Vol.-% beträgt;

g) Zuführen des Stranges oder der Brammen in das Walzwerk und Auswalzen des Stranges oder der Brammen zum Band.

Schritt a) wird dabei bevorzugt so ausgeführt, dass der Anteil an festen Ausgangsstoffen 10 bis 70 % des gesamten Chargengewichtes entspricht.
Schritt a) kann aber auch so ausgeführt werden, dass die festen Ausgangsstoffe zumindest teilweise durch flüssige Einsatzstoffe ersetzt werden.
Schritt b) wird bevorzugt so ausgeführt, dass sich ein Eintrag von mindestens 20 kg Kohlenstoff pro Minute, vorzugsweise zwischen 30 kg und 150 kg Kohlenstoff pro Minute, in die Schmelze ergibt.
Das gemäß Schritt b) kontinuierlich zugeführte Material weist bevorzugt einen mittleren Kohlenstoffanteil von mindestens 0,5 Gew.-%, besonders bevorzugt zwischen 1,0 und 3,5 Gew.-%, auf.
Schritt b) wird weiterhin bevorzugt so ausgeführt, dass die Schmelze vor dem Abstich aus dem Einschmelzaggregat (6) einen Stickstoffanteil von 5 bis 60 ppm, vorzugsweise weniger als 30 ppm aufweist.
Schritt c) wird bevorzugt so ausgeführt, dass eine mittlere Entkohlungsgeschwindigkeit zwischen 30 ppm/min und 60 ppm/min, vorzugsweise zwischen 40 ppm/min und 50 ppm/min, erreicht wird.
Die Schmelze weist bevorzugt vor der Durchführung von Schritt d) einen Kohlenstoffanteil von 0,0005 bis 0,01 Gew.-%, vorzugsweise unter 0,0040 Gew.-%, auf.
Der Strang weist bevorzugt hinter dem letzten Segment der Stranggießanlage bei der Durchführung von Schritt e) eine Oberflächentemperatur ($T_1$) von mindestens $A_3$- 20 K, bevorzugt oberhalb von 800 °C, auf.
Die Brammen können auch vor der Durchführung von Schritt f) aus der Produktionslinie zwecks Adjustage ausgeschleust werden, insbesondere zur Durchführung von Inspektionsarbeiten, Reparatur von Oberflächenfehlern und für das Teilen. Die ausgeschleusten Brammen werden dann vorzugsweise im Anschluss an die Adjustage dem Heizaggregat zugeführt und auf die erforderliche Walztemperatur aufgeheizt. Beim Eintrag der Brammen in das Heizaggregat bei der Durchführung von Schritt f) beträgt der Volumenanteil des Ferrits in den oberflächennahen Bereichen der Bramme bis in eine Tiefe von mindestens 5 mm, vorzugsweise bis in eine Tiefe von 10 mm, bevorzugt mindestens 75 Vol.-%.
Bevorzugt ist vorgesehen, dass das Gießen des Strangs, der Durchlauf durch das Heizaggregat und das Walzen in einem kontinuierlichen Prozess erfolgen. Dies kann als absolut kontinuierlicher Prozess oder auch als semi-kontinuierlicher Prozess durchgeführt werden (bei dem nur abschnittsweise kontinuierlich gegossen wird).
Wenngleich also eine gekoppelt arbeitende Gießwalzanlage (d. h. unter Direkteinsatz des gegossenen Strangs) eine bevorzugte Ausgestaltung des vorgeschlagenen Verfahrens darstellt, ist dies nicht zwingend.
In einer nicht beanspruchten Ausführungsform werden die Gefügeanteile bevorzugt über ein Rechenmodell unter Nutzung bekannter metallkundlicher Simulationsmethoden zur Thermodynamik und Kinetik von Gefügeänderungen und Phasenentstehungen bestimmt. Das Rechenmodell als Automationssystem ausgeführt liefert notwendige Informationen zur Steuerung und Regelung des Gießprozesses sowie die notwendigen Entscheidungskriterien, die zur Steuerung der Brammen in den Direkteinsatz bzw. zum Ausschleusen in die Brammenadjustage genutzt werden
Die Führung des Gesamtprozesses wird vorzugsweise durch ein übergeordnetes Prozessführungssystem gesteuert und/oder geregelt.
In einem ersten Schritt a) ist also vorgesehen, im Einschmelzaggregat durch Chargieren von festen in Verbindung mit flüssigen Ausgangsstoffen (z. B. flüssiges Roheisen und/oder der im Schmelzaggregat verbliebene Flüssigsumpf) ein schmelzflüssiges Bad zu erzeugen. Dies kann geschehen, dass feste Einsatzstoffe wie Stahlschrott und als "jungfräuliches" Material (im englischen Sprachgebrauch: virgin material) bezeichnete Eisenträger wie direktreduziertes Eisen DRI, heißbrikettiertes Eisen HBI oder festes Roheisen PI (pig iron) korbweise oder über andere geeignete Vorrichtungen wie Schüttelrinnen, Vorwärmschächte u.a. in das Schmelzaggregat eingefördert werden. Der Anteil dieser Einsatzstoffe beträgt bis zu 70% des zu erzielenden Abstichgewichtes.

Gemäß dem obigen Schritt b) ist vorgesehen, dass sich infolge der weiteren Zuführung von eisen- und kohlenstoffhaltigen Materialien ein Eintrag von mindestens 65 kg Kohlenstoff pro Minute in die Schmelze bei gleichzeitigem Verbrauch dieser Kohlenstoffmenge ergibt. Der genannte Kohlenstoffeintrag führt in Verbindung mit dem künstlich angebotenen Sauerstoff sowie dem gelösten Sauerstoff im Schmelzbad zu einer ausreichend starken Kochreaktion,

$$[C]_{gelöst} + [O]_{gelöst} = \{CO\}_{gasförmig}$$

bzw.

$$2[C]_{gelöst} + \{O_2\}_{gasförmig} = 2\{CO\}_{gasförmig}$$

die wiederum der physikalisch bedingten Tendenz der Stickstoffaufnahme während des Schmelzprozesses im Elektrolichtbogenofen entgegenwirkt.

Obiger Schritt b) wird vorzugsweise so ausgeführt, dass die Schmelze einen Stickstoffanteil beim Abstich aus dem Einschmelzaggregat von vorzugsweise weniger als 30 ppm im Flüssigstahl aufweist.

Die kontinuierlich zuzugebenden eisen- und kohlenstoffhaltigen Materialien bestehen vorzugsweise aus Eisenschwamm (DRI - Direct Reduced Iron) und/oder aus HBI (Hot Briquetted Iron) sowie aus flüssigem und/oder festem, entschwefeltem Roheisen. Die gewählte Mischung des Materialmixes weist bevorzugt einen mittleren Kohlenstoffanteil von mindestens 0,5 Gew.-%, besonders bevorzugt zwischen 1,0 und 3,5 Gew.-%, auf.

Obiger Schritt b) wird vorzugsweise durch ein Prozessführungssystem des Einschmelzaggregates gesteuert und/oder geregelt.

Obiger Schritt c) wird vorzugsweise so ausgeführt, dass eine mittlere Entkohlungsgeschwindigkeit zwischen 30 ppm/min und 60 ppm/min, vorzugsweise zwischen 40 ppm/min und 50 ppm/min, erreicht wird. Dieser Schritt wird weiterhin vorzugsweise solange ausgeführt, bis die Schmelze einen Kohlenstoffanteil von maximal 0,0020 Gew.-% aufweist.

Unter energetischen Gesichtspunkten und unter Berücksichtigung der Einflussfaktoren auf die Oberflächenqualität hat es sich als besonders vorteilhaft erwiesen, wenn der Strang hinter dem letzten Segment der Stranggießanlage (also letztlich unmittelbar in Förderrichtung hinter der Stranggießmaschine) eine Temperatur von mindestens 800 °C, vorzugsweise oberhalb seiner Austenit-Ferrit Umwandlungstemperatur $A_3$ - 20 K, aufweist.

Indes ist bevorzugt vorgesehen, dass der Strang bzw. die abgelängten Brammen am Austritt aus dem Heizaggregat eine mittlere Temperatur zwischen 1.050 °C und 1.280 °C hat.

Durch das vorgeschlagene Verfahren ist die Herstellung hochwertiger Endprodukte möglich, wobei das Direkteinsatzverfahren ohne zwischenzeitliche Abkühlung auf Raumtemperatur eingesetzt wird; dies hat wesentliche energetische Vorteile.

Demgemäß ermöglicht das vorgeschlagene Konzept eine energiesparende Herstellung warmgewalzter Stahlbänder für die Weiterverarbeitung zu hochwertigen, kaltgewalzten und gegebenenfalls beschichteten Bändern, wie sie beispielsweise in der Automobilindustrie, in der Haushaltswarenindustrie und in der Verpackungsindustrie benötigt werden.

Im Elektrolichtbogenofen (Elektroschmelzofen) werden hierzu überwiegend feste Einsatzstoffe (Schrott, DRI, HBI, Roheisen) aufgeschmolzen, woran sich die genannte sekundärmetallurgische Behandlung im Vakuum zwecks Entkohlung (für die sekundärmetallurgische Behandlung in der Vakuumanlage kommen beliebige Typen in Betracht, insbesondere Umlaufentgasung oder Tankentgasung) und gegebenenfalls eine Pfannenstandbehandlung zwecks Entschwefelung anschließt. Dann erfolgt das kontinuierliche Vergießen in der Stranggießanlage. Die erzeugten Brammen oder ein erzeugter endloser Strang werden im genannten Heizaggregaten eingesetzt und auf die zum Warmwalzen notwendige Temperatur erwärmt oder in ihrem Temperaturprofil ausgeglichen sowie anschließend zum Warmband im Walzwerk ausgewalzt.

Bevorzugt vorgesehen ist dabei eine Gesamtproduktivität (Durchsatz) von mindestens 5 t/min, gemessen an der Gießleistung der Stranggießanlage im kontinuierlichen Betrieb über mindestens 120 min.

Das beschriebene Verfahren erlaubt die Erzeugung einer chemischen Zusammensetzung des Bandes mit einem Anteil an Cu + Cr + Ni mit weniger als 0,2 Gew.-% sowie einem Anteil an S von weniger als 120 ppm und einem Anteil an N von weniger als 50 ppm bei gleichzeitig höchstmöglicher Schrotteinsatzquote in den Elektrolichtbogenofen, die mindestens 25 Gew.-% beträgt.

Damit ist die Herstellung von Warmbänder als Vormaterial, beispielsweise aus ULC/IF Stählen für die Herstellung von Automobilaußenhautmaterial oder vergleichbar anspruchsvollen Oberflächen über die beschriebene erfindungsgemäße Elektrostahlroute möglich, wodurch günstigere Investitionskosten, ein reduzierter Ausstoß an $CO_2$, die Möglichkeit zum Recycling und ein höheres Maß an Flexibilität gegeben sind.

Vorteilhaft sind auch eine schnelle Produktionstaktung beim Direkteinsatz von Brammen sowie eine hohe Oberflächenqualität.

Somit wird vorteilhaft der Umstand genutzt, dass der vom Dünnbrammen-Gieß-Walzverfahren bekante Vorteil der Ausnutzung der Gießwärme verbunden wird mit einem Stahlherstellungsprozess auf Basis fester Einsatzstoffe, der es trotz hohem Schrottanteil (von größer als 15 Gew.-%) erlaubt, Stahlqualitäten herzustellen, die bezüglich ihrer Oberflächenqualität auch beispielsweise für Außenhautanwendungen in der Automobilindustrie geeignet sind.

Gleichzeitig erlaubt die beschriebene Verfahrensweise durch einen Direkteinsatz der Brammen vorzugsweise mit Temperaturen größer als 800 °C aus der Gießmaschine in ein Heizaggregat eine energiesparende Wiedererwärmung des Gießstranges oder der Brammen auf Walztemperatur.

Weiterhin erlaubt diese Art des Direkteinsatzes der so erzeugten Brammen eine Vermeidung eines Großteils der sonst während des Abkühlens der Brammen auf Temperaturen zwischen 800 °C und 600 °C und der dann erforderlichen anschließenden Wiedererwärmung auf die erforderliche Warmwalztemperatur auftretenden Oberflächendefekte (wie beispielsweise Mikrorisse im Kantenbereich und auf den Brammenoberflächen) von mindestens 90 %.

Vorgesehen ist also eine logistische und technologische Kopplung einer Rohstahlherstellung auf Basis von Schrott und anderen festen Einsatzstoffen, der notwendigen Vakuumbehandlung des Rohstahles zur Einstellung niedriger Kohlenstoffwerte und niedrigster Stickstoff-Gehalte und des Stranggießens mit der Anforderung einer hohen Gießleistung zur Sicherstellung des Eintrages des Stranges oder der abgelängten Brammen oberhalb der für die jeweilige Stahlzusammensetzung zutreffenden Temperatur des Beginns der Austenit-Ferrit Umwandlung $A_3$ - 20 K in ein nachgeschaltetes Heizaggregat.

Die festen Einsatzstoffe werden für das Aufschmelzen im Elektrolichtbogenofen so zusammengestellt und chargiert, dass eine hohe und in ihrer Mindestgröße nach unten begrenzte Entkohlungsgeschwindigkeit sichergestellt wird. Die Produktionsleistung dieser Rohstahlstufe überschreitet vorteilhaft den Wert, der von der letzten Verarbeitungsstufe (Stranggießen) vorgegeben wird, um mindestens 10 %.

Der so hergestellte Rohstahl wird nachfolgend in einer Vakuumanlage auf den erforderlichen C-Gehalt abgesenkt. Dies erfolgt vorzugsweise dergestalt, dass die Entkohlungsgeschwindigkeit so eingestellt wird, dass die Produktionsleistung dieser Prozessstufe 5 % oberhalb des Wertes, der von der letzten Verarbeitungsstufe (Stranggießen) gefordert wird, liegt.

Die kontinuierlich produzierende Gießmaschine ist vorzugsweise so eingestellt, dass die Strang- bzw. Brammenauslauftemperatur aus dem letzten Segment ca. 20 K oberhalb des für den jeweiligen Stahl notwendigen Temperaturbereiches der Niedrigzähigkeit liegt.

Der Einsatz von DRI/HBI mit speziell eingestelltem C-Gehalt (z. B. hohe Gehalte zur Reduktion von Blaskohle oder niedrige Gehalte zur besseren Prozesssteuerung über die Kohleeinblasung) begünstigt den Prozess. Bereits hiermit kann im Rahmen des obigen Schritts b) schon gezielt die Kochreaktion im Elektrolichtbogenofen beeinflusst werden.

Vorteilhaft ist weiter der Einsatz von $CO_2$-frei erzeugtem bzw. -reduziertem DRI/HBI, beispielsweise durch Direktreduktion mit $H_2$. Möglich ist auch eine Heißchargierung von DRI.

Sofern im Rahmen des hier beschriebenen Verfahrens vom Stranggießen bzw. vom Einsatz einer Stranggießanlage gesprochen wird, sind hierunter alle Möglichkeiten zu verstehen, die zur Herstellung eines metallischen Strangs gebräuchlich sind. Neben der bevorzugt vorgesehenen Stranggießanlage, bei der der Strang aus der Kokille austritt und bogenförmig von der Vertikalen in die Horizontale umgelenkt wird, können beispielsweise auch Dünnbrammengießanlagen mit Gießdicken von 30 mm bis 90 mm oder Bandgießanlagen oder sog. Twin-Roller-Anlagen mit Gießdicken zwischen 1 mm und 30 mm zum Einsatz kommen.

In der Zeichnung ist ein Ausführungsbeispiel der Erfindung dargestellt. Die einzige Figur zeigt schematisch die Aufbereitung von Stahlschmelze, eine nachfolgende Stranggießanlage mit sich anschließendem Heizaggregat und Walzwerk.

In der Figur ist schematisch eine Fertigungsanlage dargestellt, mit der Warmband 1 gefertigt werden kann.

Zunächst erfolgt das Aufschmelzen von Ausgangsmaterial in einem Elektrolichtbogenofen 6. Die Schmelze wird dann einer Vakuumanlage 7 zugeführt, in der sie sekundärmetallurgisch behandelt wird. Anschließend gelangt die gießfertige Schmelze in eine Stranggießanlage 2, in der in bekannter Weise ein Strang 3 (Bramme) gegossen wird. Unmittelbar hinter der Stranggießanlage 2 (namentlich hinter deren letzten Segment) weist der Strang 3 die Temperatur $T_1$ auf.

Die Bramme gelangt dann in ein Heizaggregat 4, in dem die Bramme auf eine Temperatur $T_2$ erhitzt wird, mit der sie dann in das Walzwerk 5 gelangt und zum fertigen Warmband 1 gewalzt wird.

Mit dem beschriebenen Verfahren können höchstqualitative Stähle (beispielsweise für Außenhautgüten der Automobilindustrie) mittels Elektrolichtbogenofen durch Auswahl der Einsatzstoffe, durch Optimierung der Prozessführung, durch Vermeidung von nichtmetallischen Einschlüssen und durch Synchronisation mit nachgelagerten Prozessschritten (insbesondere in Form der Vakuumentkohlung, d. h. der sekundärmetallurgische Behandlung) durch ein kontinuierliches Vergießen zu einem Strang 3 von 90 bis 310 mm Dicke hergestellt werden.

Der Rohstahl weist vorzugsweise beim Abstich aus dem Einschmelzaggregat einen maximalen Kohlenstoffgehalt von 0,020 Gew.-% auf und ist, wie gesagt, im Elektrolichtbogenofen 6 erzeugt. Dabei werden vorzugsweise feste metallische Einsatzstoffen verwendet, wobei durch die Prozessführung die Erzeugung eines Rohstahles mit niedrigen Gehalten an unerwünschten Begleitelementen (Cu, Cr, Ni) und niedrigsten Gehalten an Gasen (Sickstoff, Wasserstoff) ermöglicht wird. Der hergestellte Rohstahl wird in der Vakuumanlage 7 entkohlt und nachfolgend auf der kontinuierlich produzierenden Gießmaschine 2 zum Strang 3 geformt.

Als metallische Einsatzstoffe kommen insbesondere Schrott, Roheisen und Eisenschwamm (DRI und/oder HBI) zum Einsatz, die zu einem geringen Schwefeleintrag führen.

Die metallischen Einsatzstoffe weisen ferner einen niedrigen Gehalt an unerwünschten Begleitelementen auf.

Die Zugabe an neuem Einsatzmaterial kann bezüglich der unerwünschten Stahlbegleiter erfolgen und an die zu erzeugende Stahlmarke angepasst werden.

Die metallischen Einsatzstoffe werden dabei so ausgewählt, dass in Summe ein Kohlenstoffeintrag von mindestens 1 Gew.-% ermöglicht wird.

Das Zuführen der metallischen Einsatzstoffe erfolgt vorzugsweise derart, dass während der gesamten Flachbadphase eine starke Kochreaktion gegeben ist, was durch die Zugabe von mindestens 65 kg Kohlenstoff/min gewährleistet ist.

Das Einschmelzen und die Schlackenführung erfolgen vorzugsweise derart, dass vor dem Abstich ein Stickstoffgehalt unter 30 ppm im Flüssigstahl erreicht wird.

Die Entkohlung der Rohstahlschmelze erfolgt in der Vakuumanlage 7 mit einer maximalen Entkohlungsgeschwindigkeit von 120 ppm/min Kohlenstoff bis auf Kohlenstoffgehalte vor der Abgabe an die Gießmaschine unterhalb 0,010 Gew.-%.

Die Entkohlung der Rohstahlschmelze erfolgt in der Vakuumanlage 7 weiterhin bevorzugt dergestalt, dass mit einer mittleren Entkohlungsgeschwindigkeit von 40 bis 50 ppm/min Kohlenstoff während der gesamten Entkohlungsphase gearbeitet wird.

Die sekundärmetallurgische Behandlung kann auch zur Desoxidation der entkohlten Stahlschmelze in der Vakuumanlage 7 vorgesehen werden sowie zur Einstellung der Zielzusammensetzung und der Temperaturhomogenität in der Vakuumanlage oder gegebenenfalls auch in einer nachgeschalteten atmosphärischen Behandlungsanlage.

Das Vergießen der Schmelze erfolgt auf der kontinuierlich arbeitenden Gießmaschine 2, wobei eine Austrittstemperatur aus dem letzten Segment (Temperatur $T_1$) an der Oberfläche vorzugsweise von mindestens 800 °C vorliegt.

Die Produktionszeit der Stranggießanlage 2 umfasst bevorzugt mindestens vier kontinuierlich hintereinander vergossene Schmelzen.

Weiterhin erfolgt ein direktes Eintragen der so erzeugten Bramme 3 in das nachgeschaltete Heizaggregat 4 zur Einstellung einer mittleren Austragstemperatur (Temperatur $T_2$) von 1.050 °C bis 1.280 °C.

Zwischen dem Austritt der Bramme 3 aus dem letzten Segment der Stranggießmaschine 2 und dem Eintrag in das nachgeschaltete Heizaggregat 4 kann eine automatische Oberflächeninspektion der Bramme 3 erfolgen.

Brammen 3 mit Oberflächendefekten können automatisch aus der Produktionslinie ausgeschleust und nach Abkühlung repariert werden. Reparierte Brammen können wieder in den Produktionsprozess zurückgeführt werden.

Somit stellt das Grundkonzept des vorgeschlagenen Verfahrens darauf ab, die Prozesse des Stahlschmelzens im Elektrolichtbogenofen 6, die Vakuumbehandlung in der Vakuumanlage 7 und das Stranggießen der Brammen 3 vorzugsweise mit einer Dicke größer als 110 mm so zu gestalten, dass die aus der Stranggießanlage 2 auslaufenden Brammen 3 ausreichend hohe Temperaturen aufweisen, so dass man sie ohne Gefahr von Oberflächenfehlern in das Heizaggregat 4 (vorzugsweise Hubbalkenofen) einsetzen kann.

Um die Hauptanforderung der hohen Brammentemperaturen am Eintrag in das Heizaggregat 4 zu gewährleisten, ist der gesamte Prozess davor auf hohe Durchsatzleistungen optimiert.

Demgemäß ergibt sich bei hoher Brammentemperatur eine hohe Gießgeschwindigkeit und hieraus wiederum eine schnelle Bereitstellung der Schmelze aus der Vakuumanlage 7, was wiederum zu kurzen Behandlungszeiten im Elektrolichtbogenofen 6 führt.

Die kurzen Behandlungszeiten im Elektrolichtbogenofen 6 bei gleichzeitiger Begrenzung des Stickstoffgehaltes im Stahl erfordern eine hohe Kochreaktion im Bad und konstante Entkohlungsgeschwindigkeit während der Schmelzphase, wie oben beschrieben. Eine kontinuierliche Förderung von DRI und/oder von anderen eisen- und kohlenstoffhaltigen Einsatzstoffen fördert dies.

Eine schnelle Behandlung im Vakuum bei gleichzeitiger Absenkung des Kohlenstoffgehaltes auf minimale Werte wird durch die geforderte Mindestentkohlungsgeschwindigkeit begünstigt.

Somit stellt das vorgeschlagene Konzept auf einen gekoppelten Prozess mit mehreren hintereinander angeordneten Aggregaten ab, deren Prozesse logistisch so miteinander verknüpft sind, dass am Ende die Brammen 3 direkt in das Heizaggregat 4 eingetragen werden können, ohne nachfolgend Oberflächenfehler zu bilden.

Das erfindungsmäße Verfahren von der Stahlherstellung bis zum Stahlband kann über ein übergeordnetes Prozessführungssystem gesteuert und/oder geregelt werden.

Bezugszeichenliste:

1  Warmband
2  Stranggießanlage
3  Strang (Bramme)
4  Heizaggregat (Nachwärmaggregat)
5  Walzwerk
6  Einschmelzaggregat (Elektrolichtbogenofen)
7  Vakuumanlage

$T_1$     Temperatur des Strangs hinter dem letzten Segment der Stranggießanlage

$T_2$     Temperatur des Strangs am Austritt aus dem Heizaggregat

## Patentansprüche

1. Verfahren zum Herstellen von Stahlband (1), insbesondere von Warmband, in Form gewickelter Coils oder in Form abgetafelter Einzelbleche, bei dem zunächst eine Stahlschmelze hergestellt wird, diese dann in einer Stranggießanlage (2) zu einem Strang (3) geformt wird, der Strang (3) dann ungeteilt oder unterteilt in einzelne Brammen in ein Heizaggregat (4) geleitet wird und der erhitzte Strang (3) oder die erhitzten Brammen dann in einem sich anschließenden Walzwerk (5) zum Band (1) gewalzt werden,

   wobei zunächst eine Stahlschmelze hergestellt wird, die die folgende chemische Zusammensetzung aufweist:

   - maximal 0,02 Gew.-% Kohlenstoff, vorzugsweise weniger als 0,01 Gew.-% Kohlenstoff,
   - 0,01 bis 3,5 Gew.-% Silizium, vorzugsweise weniger als 0,1 Gew.-% Silizium,
   - maximal 2,5 Gew.-% Mangan, vorzugsweise weniger als 1,0 Gew.-% Mangan,
   - 0,01 bis 0,20 Gew.-% Kupfer, vorzugsweise weniger als 0,15 Gew.-% Kupfer,
   - maximal 0,40 Gew.-% Chrom und Nickel, vorzugsweise weniger als 0,20 Gew.-% Chrom und Nickel,
   - Niob, Titan, Vanadium und Bor mit jeweils weniger als 0,10 Gew.-%, vorzugsweise Titan, Vanadium und Bor mit weniger als 0,05 Gew.-%,
   - maximal 70 ppm Stickstoff, vorzugsweise weniger als 50 ppm Stickstoff,
   - optional weitere Elemente ohne Eisen mit einem Anteil von weniger als 1,0 Gew.-%, welche gezielt zulegiert werden oder die als unvermeidbare Beimengung über die Einsatzstoffe in die Schmelze gelangen, und
   - Restgehalt an Eisen,

   wobei die Herstellung der Stahlschmelze die Schritte umfasst:

   a) Aufschmelzen von festen, eisenhaltigen Ausgangsmaterial in einem Einschmelzaggregat (6);
   b) kontinuierliches Zuführen von eisen- und kohlenstoffhaltigen festen Ausgangsmaterialien sowie von Luft, Sauerstoff und/oder Erdgas in das Einschmelzaggregat (6), um in der Flachbadphase eine kontinuierlich starke Kochreaktion über eine Dauer zwischen 2 und 30 min, vorzugsweise zwischen 10 und 20 min, zu erreichen;
   c) Zuführen der Schmelze in eine Vakuumanlage (7) und Entkohlung der Schmelze in der Vakuumanlage (7) mit einer maximalen Entkohlungsgeschwindigkeit von 180 ppm/min Kohlenstoff;

   wobei sich hieran die Schritte anschließen:

   d) Zuführen der so vorbehandelten Schmelze in die Stranggießanlage (2);
   e) Vergießen der Schmelze in der kontinuierlich arbeitenden Stranggießanlage (2);
   f) Zuführen des Stranges (3) oder der aus diesem hergestellten Brammen in das Heizaggregat (4) und Einstellen der erforderlichen Walztemperatur, wobei der Strang (3) oder die Bramme mit einer Temperatur größer als $A_3$ - 20 K direkt in das Heizaggregat (4) einläuft, so dass der Volumenanteil des Ferrits in den oberflächennahen Bereichen des Strangs oder der Bramme bis in eine Tiefe von mindestens 5 mm, bevorzugt bis in eine Tiefe von 10 mm, weniger als 5 Vol.-% beträgt;
   g) Zuführen des Stranges (3) oder der Brammen in das Walzwerk (5) und Auswalzen des Stranges oder der Brammen zum Band (1).

2. Verfahren nach Anspruch 1, **dadurch gekennzeichnet, dass** Schritt a) so ausgeführt wird, dass der Anteil an festen Ausgangsstoffen 10 bis 70 % des gesamten Chargengewichtes entspricht.

3. Verfahren nach Anspruch 1 oder 2, **dadurch gekennzeichnet, dass** Schritt a) so ausgeführt wird, dass die festen Ausgangsstoffe zumindest teilweise durch flüssige Einsatzstoffe ersetzt werden.

4. Verfahren nach einem der Ansprüche 1 bis 3, **dadurch gekennzeichnet, dass** Schritt b) so ausgeführt wird, dass sich ein Eintrag von mindestens 20 kg Kohlenstoff pro Minute, vorzugsweise zwischen 30 kg und 150 kg Kohlenstoff pro Minute, in die Schmelze ergibt.

5. Verfahren nach einem der Ansprüche 1 bis 4, **dadurch gekennzeichnet, dass** das gemäß Schritt b) kontinuierlich zugeführte Material einen mittleren Kohlenstoffanteil von mindestens 0,5 Gew.-%, vorzugsweise zwischen 1,0 und 3,5 Gew.-%, aufweist.

6. Verfahren nach einem der Ansprüche 1 bis 5, **dadurch gekennzeichnet, dass** Schritt b) so ausgeführt wird, dass die Schmelze vor dem Abstich aus dem Einschmelzaggregat (6) einen Stickstoffanteil von 5 bis 60 ppm, vorzugsweise weniger als 30 ppm aufweist.

7. Verfahren nach einem der Ansprüche 1 bis 6, **dadurch gekennzeichnet, dass** Schritt c) so ausgeführt wird, dass eine mittlere Entkohlungsgeschwindigkeit zwischen 30 ppm/min und 60 ppm/min, vorzugsweise zwischen 40 ppm/min und 50 ppm/min, erreicht wird.

8. Verfahren nach einem der Ansprüche 1 bis 7, **dadurch gekennzeichnet, dass** die Schmelze vor der Durchführung von Schritt d) einen Kohlenstoffanteil von 0,0005 bis 0,01 Gew.-%, vorzugsweise unter 0,0040 Gew.-%, aufweist.

9. Verfahren nach einem der Ansprüche 1 bis 8, **dadurch gekennzeichnet, dass** der Strang (3) hinter dem letzten Segment der Stranggießanlage (2) bei der Durchführung von Schritt e) eine Oberflächentemperatur ($T_1$) von mindestens $A_3$ - 20 K, bevorzugt oberhalb von 800 °C, aufweist.

10. Verfahren nach einem der Ansprüche 1 bis 9, **dadurch gekennzeichnet, dass** die Brammen vor der Durchführung von Schritt f) aus der Produktionslinie zwecks Adjustage ausgeschleust werden, insbesondere zur Durchführung von Inspektionsarbeiten, Reparatur von Oberflächenfehlern und für das Teilen.

11. Verfahren nach Anspruch 10, **dadurch gekennzeichnet, dass** die ausgeschleusten Brammen im Anschluss an die Adjustage dem Heizaggregat (4) zugeführt und auf die erforderliche Walztemperatur aufgeheizt werden.

12. Verfahren nach einem der Ansprüche 1 bis 11, dadurch gegen seine, dass das Gießen des Strangs (3), der Durchlauf durch das Heizaggregat (4) und das Walzen in einem kontinuierlichen Prozess erfolgen.

**Claims**

1. Method for producing steel strip (1), in particular hot strip, in the form of wound coils or in the form of piled-up individual sheets, in which firstly a steel melt is produced, then this is formed into a strand (3) in a continuous casting plant (2), the strand (3) is conducted, undivided or divided into individual slabs, into a heating unit (4) and then the heated strand (3) or the heated slabs are rolled into strip (1) in a downstream rolling mill, wherein firstly a steel melt is produced which has the following chemical composition:

- maximum 0.02 wt. % carbon, preferably less than 0.01 wt. % carbon,
- 0.01 to 3.5 wt. % silicon, preferably less than 0.1 wt. % silicon,
- maximum 2.5 wt. % manganese, preferably less than 1.0 wt. % manganese,
- 0.01 to 0.20 wt. % copper, preferably less than 0.15 wt. % copper,
- maximum 0.40 wt. % chromium and nickel, preferably less than 0.20 wt. % chromium and nickel,
- niobium, titanium, vanadium and boron each at less than 0.10 wt. %, preferably titanium, vanadium and boron each at less than 0.05 wt. %,
- maximum 70 ppm nitrogen, preferably less than 50 ppm nitrogen,
- optionally other elements without iron in a proportion of less than 1.0 wt. %, which are selectively added or which enter the melt as an unavoidable admixture via the input materials, and
- residual content of iron,

wherein the production of the steel melt comprises the steps of:

a) melting of solid starting material containing iron in a smelting unit (6);
b) continuously feeding solid starting materials containing iron and carbon as well as air, oxygen and/or natural gas into the smelting unit (6) to achieve a continuously strong boiling reaction in the flat bath phase over a period of between 2 and 30 minutes, preferably between 10 and 20 minutes;
c) feeding the melt into a vacuum system (7) and decarburising the melt in the vacuum system (7) at a maximum decarburisation rate of 180 ppm/min carbon;

wherein this is followed by the steps:

d) feeding the melt thus pretreated into the continuous casting plant (2);
e) pouring the melt into the continuously operating continuous casting plant (2);
f) feeding the strand (3) or the slabs produced therefrom into the heating unit (4) and setting the required rolling temperature, wherein the strand (3) or the slab enters the heating unit (4) directly at a temperature greater than $A_3$ - 20 K such that the volume fraction of ferrite in the near-surface regions of the strand or the slab is less than 5 vol % down to a depth of at least 5 mm, preferably down to a depth of 10 mm;
g) feeding the strand (3) or slabs into the rolling mill (5) and rolling out the strand or slabs into the strip (1).

2. Method according to claim 1, **characterised in that** step a) is carried out in such a way that the proportion of solid starting materials corresponds with 10 to 70% of the total charge weight.

3. Method according to claim 1 or 2, **characterised in that** step a) is carried out in such a way that the solid starting materials are at least partially replaced by liquid input materials.

4. Method according to any one of claims 1 to 3, **characterised in that** step b) is carried out in such a way that an intake of at least 20 kg of carbon per minute, preferably between 30 kg and 150 kg of carbon per minute, into the melt results.

5. Method according to any one of claims 1 to 4, **characterised in that** the material continuously fed according to step b) has a mean carbon content of at least 0.5 wt. %, preferably between 1.0 and 3.5 wt. %.

6. Method according to any one of claims 1 to 5, **characterised in that** step b) is carried out in such a way that the melt has a nitrogen content of 5 to 60 ppm, preferably less than 30 ppm, prior to tapping from the smelting unit (6).

7. Method according to any one of claims 1 to 6, **characterised in that** step c) is carried out in such a way that a mean decarburisation rate between 30 ppm/min and 60 ppm/min, preferably between 40 ppm/min and 50 ppm/min is achieved.

8. Method according to any one of claims 1 to 7, **characterised in that** the melt has a carbon content of 0.0005 to 0.01 wt. %, preferably below 0.0040 wt. %, before carrying out step d).

9. Method according to any one of claims 1 to 8, **characterised in that** the strand (3) downstream of the last segment of the continuous casting plant (2) has a surface temperature ($T_1$) of at least $A_3$ - 20 K, preferably above 800° C, when step e) is carried out.

10. Method according to any one of claims 1 to 9, **characterised in that** the slabs are discharged from the production line for the purpose of finishing, in particular for carrying out inspection work, repairing surface defects and for dividing, before carrying out step f).

11. Method according to claim 10, **characterised in that** the discharged slabs are fed to the heating unit (4) after the finishing and are heated to the required rolling temperature.

12. Method according to any one of claims 1 to 11, **characterised in that** the casting of the strand (3), the passage through the heating unit (4) and the rolling take place in a continuous process.

**Revendications**

1. Procédé de fabrication de feuillard d'acier (1), en particulier de feuillard à chaud, sous forme de bobines enroulées ou sous forme de tôles individuelles aplaties, dans lequel on produit d'abord une fonte d'acier, qui est ensuite transformée en une barre (3) dans une installation de coulée continue (2), ladite barre (3) est ensuite guidée, en entier ou divisée en brames individuelles, jusque dans une unité de chauffe (4), et la barre (3) chauffée ou les brames chauffées sont ensuite laminées en feuillard (1) dans un laminoir (5) ultérieur,

dans lequel on obtient d'abord une fonte d'acier ayant la composition chimique suivante :

- au maximum 0,02 % en poids de carbone, de préférence moins de 0,01 % en poids de carbone,
- 0,01 à 3,5 % en poids de silicium, de préférence moins de 0,1 % en poids de silicium,
- au maximum 2,5 % en poids de manganèse, de préférence moins de 1,0 % en poids de manganèse,
- 0,01 à 0,20 % en poids de cuivre, de préférence moins de 0,15 % en poids de cuivre,
- au maximum 0,40 % en poids de chrome et de nickel, de préférence moins de 0,20 % en poids de chrome et de nickel,
- niobium, titane, vanadium et bore chacun à moins de 0,10 % en poids, de préférence titane, vanadium et bore à moins de 0,05 % en poids,
- au maximum 70 ppm d'azote, de préférence moins de 50 ppm d'azote,
- éventuellement d'autres éléments sauf le fer à une teneur inférieure à moins de 1,0 % en poids, qui sont spécifiquement alliés ou qui entrent dans la masse fondue comme ajout inévitable via les matières premières, et
- teneur résiduelle en fer,

dans lequel la production de la fonte d'acier comprend les étapes :

a) faire fondre un matériau de départ solide contenant du fer dans une unité de fusion (6);
b) alimenter en continu des matières premières solides contenant du fer et du carbone, ainsi que de l'air, de l'oxygène et/ou du gaz dans l'unité de fusion (6), afin d'obtenir une réaction de cuisson forte et continue dans la phase de bain plat sur une période comprise entre 2 et 30 min, de préférence entre 10 et 20 min;

c) alimenter la masse fondue dans une installation à vide (7) et décarburer la masse fondue dans l'installation à vide (7) avec un taux de décarburation maximal de 180 ppm/min de carbone;

suivi des étapes suivantes :

d) alimenter la matière fondue ainsi prétraitée dans l'installation de coulée continue (2);

e) couler la masse fondue dans l'installation de coulée continue (2) fonctionnant en continu ;

f) alimenter la barre (3) ou les brames produites à partir de celle-ci dans l'unité de chauffe (4) et régler à la température de laminage requise, dans lequel la barre (3) ou la brame est introduite directement dans l'unité de chauffe (4) à une température supérieure à $A_3$ - 20 K, de telle sorte que la fraction volumique de la ferrite dans les zones proches de la surface de la barre ou de la brame soit inférieure à 5 % en volume jusqu'à une profondeur d'au moins 5 mm, de préférence jusqu'à une profondeur de 10 mm ;

g) alimenter la barre (3) ou les brames dans le laminoir (5) et laminer la barre ou les brames en feuillard (1).

2. Procédé selon la revendication 1, **caractérisé en ce que** l'étape a) est réalisée de telle sorte que la proportion de matières premières solides corresponde à 10 à 70 % du poids total du lot.

3. Procédé selon la revendication 1 ou 2, **caractérisé en ce que** l'étape a) est réalisée de telle sorte que les matières premières solides soient au moins partiellement remplacées par des matières premières liquides.

4. Procédé selon l'une des revendications 1 à 3, **caractérisé en ce que** l'étape b) est réalisée de telle sorte qu'il en résulte un apport d'au moins 20 kg de carbone par minute, de préférence entre 30 kg et 150 kg de carbone par minute, dans la masse fondue.

5. Procédé selon l'une des revendications 1 à 4, **caractérisé en ce que** le matériau alimenté en continu selon l'étape b) présente une teneur moyenne en carbone d'au moins 0,5 % en poids, de préférence entre 1,0 et 3,5 % en poids.

6. Procédé selon l'une des revendications 1 à 5, **caractérisé en ce que** l'étape b) est réalisée de telle sorte que la masse fondue présente une teneur en azote de 5 à 60 ppm, de préférence de moins de 30 ppm, avant soutirage de l'unité de fusion (6).

7. Procédé selon l'une des revendications 1 à 6, **caractérisé en ce que** l'étape c) est réalisée de telle sorte qu'un taux moyen de décarburation entre 30 ppm/min et 60 ppm/min, de préférence entre 40 ppm/min et 50 ppm/min, soit accompli.

8. Procédé selon l'une des revendications 1 à 7, **caractérisé en ce que** la masse fondue présente une teneur en carbone de 0,0005 à 0,01 % en poids, de préférence inférieure à 0,0040 % en poids, avant l'exécution de l'étape d).

9. Procédé selon l'une des revendications 1 à 8, **caractérisé en ce qu'**après le dernier segment de l'installation de coulée continue (2), lors de l'exécution de l'étape e), la barre (3) présente une température de surface ($T_1$) d'au moins $A_3$ - 20 K, de préférence de plus de 800 °C.

10. Procédé selon l'une des revendications 1 à 9, **caractérisé en ce que** les brames sont retirées de la chaîne de fabrication avant de réaliser l'étape f) en vue d'une finition, en particulier pour effectuer des travaux de contrôle, des réparations de défauts de surface et une division.

11. Procédé selon la revendication 10, **caractérisé en ce que** les brames retirées sont amenées à l'unité de chauffe (4) après la finition et chauffées à la température de laminage requise.

12. Procédé selon l'une des revendications 1 à 11, **caractérisé en ce que** la coulée de la barre (3), le passage dans l'unité de chauffe (4) et le laminage s'effectuent dans un processus continu.

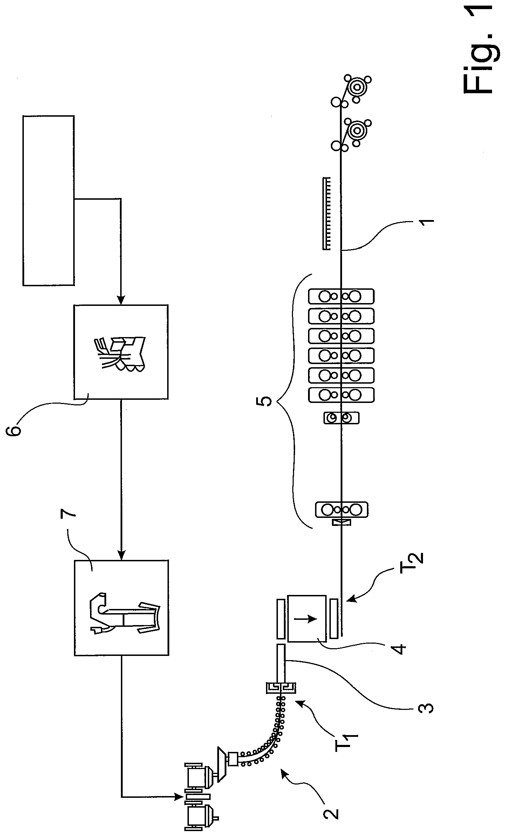

Fig. 1

**EP 4 185 424 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1752549 A1
- WO 2004108971 A2
- US 2016108494 A1
- DE 69227014 T2
- DE 69713639 T2
- EP 2998046 B1

- CN 106148639 A
- JP 2003064412 A
- KR 1063666 B1
- KR 2019076164 A
- KR 1017511 B1
- KR 1412566 B1